**Europäisches Patentamt**

**European Patent Office**

**Office européen des brevets**

(19)

(11) Veröffentlichungsnummer: **0 012 413 B1**

(12) **EUROPÄISCHE PATENTSCHRIFT**

(45) Veröffentlichungstag der Patentschrift:
05.08.81

(21) Anmeldenummer: **79105044.6**

(22) Anmeldetag: **10.12.79**

(51) Int. Cl.³: **C 08 L 75/04**, C 08 L 55/02,
C 08 L 69/00, C 08 G 18/08

(54) Verfahren zur Herstellung von thermoplastischen Chemiewerkstoffen.

(30) Priorität: **16.12.78 DE 2854409**

(43) Veröffentlichungstag der Anmeldung:
**25.06.80 Patentblatt 80/13**

(45) Bekanntmachung des Hinweises auf die Patenterteilung:
**05.08.81 Patentblatt 81/31**

(84) Benannte Vertragsstaaten:
**BE DE FR GB IT NL**

(56) Entgegenhaltungen:
**DE-A-1 964 834**
**DE-A-2 128 199**
**GB-A-1 513 197**

(73) Patentinhaber: **BAYER AG, Zentralbereich Patente, Marken und Lizenzen, D-5090 Leverkusen 1, Bayerwerk (DE)**

(72) Erfinder: **Goyert, Wilhelm, Dr., Wolfskaul 10, D-5000 Köln 80 (DE)**
Erfinder: **Meisert, Ernst, Dr., Am Kiesberg 19, D-5090 Leverkusen (DE)**
Erfinder: **Grimm, Wolfgang, In Holzhausen 81, D-5090 Leverkusen 3 (DE)**
Erfinder: **Eitel, Alfred, Dr., Bahnhofstrasse 41, D-4047 Dormagen (DE)**
Erfinder: **Wagner, Hans, Dr., Tizianstrasse 13, D-4047 Dormagen (DE)**
Erfinder: **Niederdellmann, Georg, Dr., Heinestrasse 6, D-4047 Dormagen (DE)**
Erfinder: **Quiring, Bernd, Dr., Albrecht-Haushofer Strasse 2, D-5090 Leverkusen (DE)**

Verfahren zur Herstellung von thermoplastischen Chemiewerkstoffen

Die vorliegende Erfindung betrifft ein verbessertes Verfahren zur Herstellung von thermoplastischen Polymergemischen, indem man Polyurethan bildende Ausgangskomponenten in Gegenwart eines vorgefertigten Thermoplasten in einem Extruder, bevorzugt in einer selbstreinigenden Mehrwellenschneckenmaschine, umsetzt.

Thermoplastische Polyurethane werden aufgrund ihrer hervorragenden physikalischen Eigenschaften seit Jahren für die unterschiedlichsten Einsatzzwecke verwendet. Von den in der Literatur beschriebenen Herstellungsverfahren für solche Thermoplasten bietet sich vor allem die direkte Herstellung in selbstreinigenden Zweiwellenschneckenmaschinen an. In diesen Apparaten wird eine sehr rasche Homogenisierung des Reaktionsgemischs erreicht, und die Schneckenwellen reinigen einander und den Zylinder an allen Stellen, so dass auch vorübergehende Anbackungen, die durch die lange Hitzeeinwirkung zu Zersetzung oder vernetzten Produkten führen könnten, vermieden werden.

Bei den bisher bekannten Verfahren sind besondere Massnahmen notwendig, um die Reaktanden (höhermolekulares Polyol, Kettenverlängerer und Diisocyanat) so zusammenzubringen, dass eine homogene Mischung entsteht, bevor die Polyurethanbildung in merklichem Umfang eingesetzt hat. Werden die Reaktionspartner zu langsam gemischt, so entstehen inhomogene Polyurethane, die nicht oder nur schwer lösliche bzw. aufschmelzbare Gelteilchen enthalten.

Nach der Lehre der US-Patentschrift 3 233 025 werden die einzelnen Reaktionspartner zunächst in einem besonderen Mischaggregat zusammengebracht und erst die homogene Reaktionsschmelze in die Schneckenmaschine eingespeist.

Bei dem in der US-Patentschrift 3 624 964 beschriebenen Verfahren müssen die Reaktionspartner ebenfalls sehr schnell gemischt werden. Das wird erreicht, indem die Reaktionsschmelze in einer Zweiwellenschneckenmaschine spätestens 6 Sekunden nach der Einspeisung von Diisocyanat und Diol in einer Mischzone mit Hilfe von Knetbesätzen intensiv homogenisiert wird. Ferner ist es zur Erzielung eines einheitlichen Produkts notwendig, dass die Schmelzviskosität über die gesamte Extruderlänge praktisch gleich (im Bereich zwischen ca. 100 und 1000 Pa s) bleibt.

Entsprechend der Lehre der DE-Offenlegungsschriften 23 02 564 und 25 49 372 muss hingegen bereits in einem Stadium, in dem die Reaktionsschmelze noch eine niedrige Viskosität (ca. 20 bis 70 Pa s) hat, das Reaktionsgemisch mit Hilfe von Knetelementen in der Schnecke intensiv gemischt werden, damit die Bildung von Inhomogenitäten im Endprodukt vermieden wird.

Gemäss einer besonderen Variante des Verfahrens dieser DE-Offenlegungsschriften kann man während oder nach der Reaktion dem Produkt in der Schneckenmaschine Zuschlagstoffe wie z.B. Thermoplaste beimengen. Auch in diesem Fall müssen jedoch die Kriterien hinsichtlich der Knetzone beachtet werden.

Bei den Verfahren der DE-Offenlegungsschriften 24 47 368 und 26 10 980 muss von der Einzugszone bis zum Verlassen des Extruders ein abfallendes Temperaturprofil in der Reaktionsschmelze eingestellt werden, so dass man nur wenig Möglichkeiten zum Steuern der Polyisocyanatpolyadditionsreaktion hat. Besonders schwierig dürfte die Herstellung eines homogenen thermoplastischen Polyurethans entsprechend der Lehre der DE-OS 26 10 980 sein, da die Ausgangsprodukte zuerst hoch erhitzt und erst dann zusammengebracht werden. Ohne eine sehr rasche Durchmischung dürfte ein erheblicher Teil der Polyurethanreaktion bereits ablaufen, während noch lokale Überkonzentrationen der einzelnen Reaktionspartner vorliegen, so dass ein uneinheitliches Produkt entsteht. Ausserdem sind die Ausgangstemperaturen so hoch, dass das entstehende Polyurethan thermisch geschädigt werden kann.

Es wurde nun überraschend ein Verfahren zur Herstellung von Blends aus verschiedenen Thermoplasten (wobei mindestens eine Komponente ein thermoplastisches Polyurethan ist) in Extrudern, bevorzugt Mehrwellenschneckenmaschinen, besonders bevorzugt selbstreinigenden Zweiwellenschneckenmaschinen, gefunden, bei dem die genannten Hilfsmittel zur Erzielung einer raschen Durchmischung der Reaktionsschmelze nicht notwendig sind. Bei der Ausübung des erfindungsgemässen Verfahrens kann darauf verzichtet werden, Knetblöcke an einer bestimmten Stelle der Schneckenwellen anzuordnen; die Reaktionspartner brauchen nicht vorgemischt zu werden, und es ist auch nicht notwendig, dass ein sehr enges Temperatur- und/oder Viskositätsprofil eingehalten wird.

Gegenstand der vorliegenden Erfindung ist ein kontinuierliches Verfahrens zur Herstellung von thermoplastischen Chemiewerkstoffen durch Umsetzung von

A) einem oder mehreren organischen Polyisocyanaten, vorzugsweise Diisocyanaten, gegebenenfalls

B) einem oder mehreren im wesentlichen linearen Polyolen mit Molekulargewichten zwischen 400 und 10 000, bevorzugt zwischen 450 und 6000, und

C) einem oder mehreren Hydroxylgruppen und/oder Aminogruppen aufweisenden Kettenverlängerungsmitteln mit einem Molekulargewicht unter 400, vorzugsweise unter 250, wobei das Verhältnis der NCO-Gruppen von Komponente A) zu den zerewitinoffaktiven Gruppen der Komponenten B) und C) zwischen 0,90 und 1,2, bevorzugt zwischen 0,95 und 1,10 liegt, in Gegenwart eines vorgefertigten thermoplastischen Polymeren in Extrudern, bevorzugt Mehrwellenextrudern, besonders bevorzugt selbstreinigenden Zweiwellenschneckenmaschinen, welches dadurch gekennzeichnet ist, dass man 4 bis 65 Gew.-%, vorzugsweise 10 bis 50 Gew.-%, bezogen auf Verfahrensprodukt, des vorgefertigten thermoplastischen Polymeren über eine erste Einspeisstelle in den Extruder einbringt, danach über eine zweite und gegebenenfalls weitere Einspeisstellen 35 bis 96 Gew.-%, bevorzugt 50 bis 90 Gew.-%, bezogen auf Verfahrensprodukt, der Komponenten A) bis C) dem aufgeschmolzenen thermoplastischen Polymeren zudosiert und, nachdem die Umsetzung der Komponenten A) bis C) im wesentlichen abgeschlossen ist, das Verfahrensprodukt aus dem Extruder austrägt.

Als im wesentlichen lineare Polyole mit Molekulargewichten zwischen 400 und 10 000, bevorzugt zwischen 450 und 6000, kommen erfindungsgemäss praktisch alle an sich bekannten, vorzugsweise 2, gegebenenfalls – in untergeordneten Mengen – auch 3, zerewitinoffaktive Gruppen (im wesentlichen Hydroxylgruppen) enthaltenden Polyester, Polylactone, Polyäther, Polythioäther, Polyesteramide, Polycarbonate, Polyacetale, Vinylpolymere wie z.B. Polybutadiendiole, bereits Urethan- oder Harnstoffgruppen enthaltende Polyhydroxylverbindungen, gegebenenfalls modifizierte natürliche Polyole, sowie auch andere zerewitinoffaktive Gruppen wie Amino-, Carboxyl- oder Thiolgruppen enthaltende Verbindungen in Betracht. Diese Verbindungen entsprechen dem Stand der Technik und werden z.B. in den DE-Offenlegungsschriften 23 02 564, 24 23 764 und 25 49 372 (US-Patent 3 963 679) und 24 02 840 (US-Patent 3 984 607) sowie der DE-AS 24 57 387 (US-Patent 4 035 213) eingehend beschrieben. Erfindungsgemäss bevorzugt sind hydroxylgruppenhaltige Polyester aus Glykolen und Adipinsäure, Phthal- und/oder Terephthalsäure sowie deren Hydrierungsprodukten, Hydroxylpolycarbonate, Polycaprolactone, Polyäthylenoxid, Polypropylenoxid, Polytetrahydrofuran und Mischpolyäther aus Äthylenoxid und Propylenoxid.

Erfindungsgemäss zu verwendende Diisocyanate sind die an sich bekannten aliphatischen, cycloaliphatischen, aromatischen, araliphatischen und heterocyclischen Diisocyanate des Standes der Technik wie sie z.B. in den bereits genannten DE-Offenlegungsschriften 23 02 564, 24 23 764, 25 49 372, 24 02 840 und 24 57 387 beschrieben sind. Erfindungsgemäss bevorzugte Diisocyanate sind gegebenenfalls substituiertes Hexamethylendiisocyanat, Isophorondiisocyanat, Lysinesterdiisocyanate, die verschiedenen Toluylen-, Diphenylmethan- und Xylylendiisocyanate sowie deren Hydrierungsprodukte und Naphthylen-1,5-diisocyanat.

Die genannten Diisocyanate können gegebenenfalls zusammen mit bis zu ca. 15 Mol-% (bezogen auf Diisocyanat) eines höherfunktionellen Polyisocyanats eingesetzt werden; die Menge des höherfunktionellen Polyisocyanats muss jedoch so begrenzt werden, dass ein noch schmelzbares bzw. thermoplastisches Produkt aus der Schneckenmaschine austritt. Eine grössere Menge an höherfunktionellen Isocyanaten muss im allgemeinen durch die Mitverwendung von im Durchschnitt weniger als difunktionellen Hydroxyl- bzw.

Aminoverbindungen (bzw. auch von Monoisocyanaten) ausgeglichen werden, so dass eine zu weit gehende chemische Vernetzung des aus der Schneckenmaschine austretenden Produkts vermieden wird. Es ist aber selbstverständlich auch möglich, die Reaktion so zu führen, dass eine nachträgliche chemische Vernetzung des Elastomeren während der Lagerung eintritt (z.B. durch Verwendung eines Überschusses an NCO-Gruppen enthaltenden Verbindungen). Beispiele für höherfunktionelle Isocyanate und monofunktionelle Verbindungen sind ebenfalls dem oben zitierten Stand der Technik zu entnehmen. Beispielsweise seien Monoamine wie Butyl- und Dibutylamin, Octylamin, Stearylamin, N-Methylstearylamin, Pyrrolidin, Piperidin und Cyclohexylamin sowie Monoalkohole wie Butanol, 1-Äthylhexanol, Octanol, Dodecanol, Amylalkohole, Cyclohexanol und Äthylenglykolmonoäthyläther erwähnt.

Auch die erfindungsgemäss einzusetzenden Kettenverlängerungsmittel sind an sich bekannt und z.B. in den DE-Offenlegungsschriften 23 02 564, 24 23 764, 25 49 372, 24 02 799, 24 02 840 und 24 57 387 beschrieben. Es sind dies niedermolekulare Polyalkohole (vorzugsweise Glykole), Polyamide, Hydrazine und Hydrazide. Auch Aminoalkohole wie Äthanolamin, Diäthanolamin, N-Methyldiäthanolamin, Triäthanolamin und 3-Aminopropanol kommen erfindungsgemäss in Frage. Bevorzugte Kettenverlängerungsmittel sind Äthylenglykol, Di- und Triäthylenglykol, 1,2-Propandiol, 1,3- und 1,4-Butandiol, 1,6-Hexandiol, 2-Äthylhexandiol-(1,3), 2,2-Dimethylpropandiol, 1,4-Bis-hydroxymethylcyclohexan und Hydrochinondihydroxyäthyläther. Besonders bevorzugt sind Äthylenglykol, Diäthylenglykol, 1,4-Butandiol und 1,6-Hexandiol.

Die genannten Polyurethan-bildenden Komponenten A) bis C) können über eine einzige oder auch über mehrere Einspeisstellen in den Extruder eingebracht werden. Man kann die Komponenten sowohl getrennt als auch vorvermischt in die Schneckenmaschine einbringen. Insbesondere bei der Verwendung von aminofunktionellen Kettenverlängerungsmitteln ist es jedoch empfehlenswert, zunächst ein Umsetzungsprodukt aus dem Polyisocyanat und der höhermolekularen Polyhydroxylverbindung herzustellen. Als Isocyanatkomponente A) dient in diesem Falle also ein relativ hochmolekulares, NCO-Gruppen aufweisendes Voraddukt.

Im erfindungsgemässen Verfahren können die verschiedenartigsten vorgefertigten thermoplastischen Polymere eingesetzt werden. In Frage kommen beispielsweise thermoplastische Polyurethane, welche nach den bekannten Verfahren des Standes der Technik hergestellt wurden, wie er z.B. durch DE-AS 1 106 959, DE-AS 1 157 772, GB-PS 1 057 018 und die bereits genannten DE-Offenlegungsschriften 23 02 564 und 24 74 764 repräsentiert wird.

Erfindungsgemäss geeignete thermoplastische Polymere sind auch die an sich bekannten ABS-Pfropfcopolymerisate. Hierbei handelt es sich um elastisch-thermoplastische Produkte, welches im wesentlichen aus den Monomeren Acrylnitril (A), Butadien (B) und Styrol bzw. $\alpha$-Methylstyrol (S) aufgebaut sind. B kann ganz oder teilweise durch eine andere Kautschukkomponente ersetzt sein, z.B. durch einen EPDM-Kautschuk (sogenannte AES-Polymerisate).

Diese Polymerisate werden in an sich bekannter Weise durch Emulsions-, Suspensions-, Masse- und Lösungspolymerisation bzw. Kombinationen dieser Verfahren hergestellt, wie es z.B. von C.H. Basdekis in «ABS-Plastics», Reinhold Publishing Corporation, New York, 1964, beschrieben wird.

Andere erfindungsgemäss geeignete Thermoplaste sind Polyäthylen und Polypropylen (derartige Polymerisate sollten im erfindungsgemässen Verfahren jedoch nur in einer Menge von maximal 10 Gew.-%, bezogen auf gesamtes Verfahrensprodukt, mitverwendet werden), Copolymere aus Äthylen und weiteren olefinisch ungesättigten Monomeren, Polybuten-(1), Polymethylpenten, Polystyrol (insbesondere schlagzähes Polystyrol), PVC, Polymethacrylsäuremethylester, Polyamide, aromatische Polyäther (z.B. Polyphenylenoxid), Polyester aus Terephthalsäure und ggf. Isophthalsäure sowie Butylenglykol und/oder Äthylenglykol, Polyäther-Weichsegmente enthaltendes Polybutylenglykolterephthalat, Celluloseester (z.B. Celluloseacetat, -propionat und -acetobutyrat), Styrol-Butadien-(Pfropf)-copolymerisate (ggf. in Abmischung mit weiteren Polymerisaten), sowie Polypropylen und Äthylen--Propylen-Copolymere in Abmischung mit EPM und/oder EPDM-Kautschuken. Polymerisate dieser Art werden z.B. von Vieweg et al. im «Kunststoff-Handbuch», Bd. II, IV–VII, IX und XI, Carl Hanser Verlag, München, 1963–1971, und von Hansjürgen Saechtling im «Kunststofftaschenbuch», 20. Ausgabe, Carl Hanser Verlag, München – Wien, 1977, beschrieben.

Erfindungsgemäss bevorzugte ABS-Polymerisate sind Mischungen aus

a) 5–70 Gew.-% eines oder mehrerer Pfropfprodukte und

b) 95–30 Gew.-% eines oder mehrerer thermoplastischer Harze.

Pfropfprodukte a) sind bevorzugt Polymerisate, die durch Polymerisation von Pfropfmonomeren in Anwesenheit eines Kautschuks als Pfropfbasis erhalten werden. Der Kautschukanteil beträgt dabei ca. 5–80 Gew.-% und wird durch das Polymerisationsverfahren mitbestimmt.

Als Pfropfbasis kommen insbesondere Polybutadien-, Butadien/Acrylnitril- und Butadien/Styrol-Polymerisate sowie Butadien-Styrol-Blockpolymerisate in Betracht. Pfropfmonomere sind hauptsächlich Styrol, Gemische aus Styrol und Acrylnitril, bevorzugt im Gewichtsverhältnis 90:10 bis 50:50, Gemische aus Styrol und Methylmethacrylat, bevorzugt im Gewichtsverhältnis 5:95 bis 95:5, sowie Styrol-Acrylnitril-Methylmethacrylat-Gemische.

Das den zweiten Bestandteil der ABS-Polymerisate bildende thermoplastische Harz b) bildet die kontinuierliche Phase (Matrix) und ist z.B. ein Polymerisat oder Copolymerisat von Styrol, $\alpha$-Methylstyrol, Acrylnitril, Methylmethacrylat und Maleinsäureanhydrid.

Bevorzugt sind Polystyrol, Styrol-Acrylnitril-Copolymerisate mit einem Acrylnitril-Gehalt von 20–35 Gew.-% sowie $\alpha$-Methylstyrol-Acrylnitril-Copolymere mit einem Acrylnitril-Gehalt von 20–31 Gew.-%. Das Gewichtsmittel des Molekulargewichts dieser Harze ist meist 50 000–550 000. Die molekulare Uneinheitlichkeit, ausgedrückt durch

den Wert $\left( \dfrac{M_w}{M_n} \right) - 1 = U_n$ ist 1,0–3,5.

Gegebenenfalls kann erfindungsgemäss jedoch auch die Komponente a) allein als Thermoplast eingesetzt werden.

Als erfindungsgemäss einzusetzende thermoplastische Polycarbonate kommen die durch Umsetzung von Dihydroxydiarylalkanen mit Phosgen oder Diestern der Kohlensäure erhältlichen Polykondensate in Betracht, wobei neben den unsubstituierten Dihydroxydiarylalkanen auch solche geeignet sind, deren Arylreste in o- und/oder m-Stellung zur Hydroxylgruppe Methylgruppen oder Halogenatome tragen. Ebenso sind verzweigte Polycarbonate geeignet. Diese Polycarbonate haben im allgemeinen mittlere Molekulargewichte zwischen 10 000 und 100 000, vorzugsweise zwischen 20 000 und 40 000.

Geeignete aromatische Dihydroxyverbindungen sind z.B. Hydrochinon, Resorcin, 4,4'-Dihydroxydiphenyl, Bis-(hydroxy-phenyl)-alkane wie beispielsweise $C_1$–$C_8$-Alkylen- bzw. $C_2$–$C_8$-Alkyliden-bisphenole, Bis-(hydroxyphenyl)- cycloalkane wie beispielsweise $C_5$–$C_{15}$-Cycloalkylen- bzw. $C_5$–$C_{15}$-Cycloalkyliden-bisphenole, Bis-(hydroxyphenyl)-sulfide, -äther, -ketone, -sulfoxide oder -sulfone. Ferner $\alpha,\alpha'$-Bis-(hydroxyphenyl)-diisopropylbenzol sowie die entsprechenden kernalkylierten bzw. kernhalogenierten Verbindungen. Bevorzugt sind Polycarbonate auf Basis Bis-(4-hydroxy-phenyl)-propan-2,2-(Bisphenol A), Bis-(4-hydroxy-3,5-dichlor-phenyl)-propan-2,2 (Tetrachlorbisphenol A), Bis-(4-hydroxy-3,5-dibrom-phenyl-propan-2,2 (Tetrabrombisphenol A), Bis-(4-hydroxy-3,5-dimethyl-phenyl)-propan-2,2 (Tetramethylbisphenol A), Bis-(4-hydroxy-phenyl)-cyclo hexan-1,1 (Bisphenol Z) sowie auf Basis von Dreikernbisphenolen wie $\alpha,\alpha'$-Bis-(4-hydroxyphenyl)-p-diisopropylbenzol.

Weitere für die Herstellung von Polycarbonaten geeignete Bisphenole sind in den US-Patenten 3 028 365, 2 999 835, 3 148 172, 3 271 368, 2 970 137, 2 991 273, 3 271 367, 3 280 078, 3 014 891 und 2 999 846 beschrieben.

Bevorzugt werden erfindungsgemäss als Thermoplaste Polycarbonate, besonders bevorzugt jedoch ABS-Polymere eingesetzt.

Im Falle der Verwendung von thermoplastischem Polycarbonat werden vorzugsweise 25 bis 60 Gew.-%, besonders bevorzugt 30 bis 50 Gew.-%, bezogen auf Gesamtgewicht des Verfahrensprodukts, eingesetzt; thermoplastisches ABS wird vorzugsweise in einer Menge von 4 bis 30 Gew.-%, besonders bevorzugt 10 bis 20 Gew.-%, bezogen auf gesamtes Verfahrensprodukt, angewandt.

Das erfindungsgemässe Verfahren wird folgendermassen ausgeführt:

In die Einzugszone einer Schneckenmaschine wird das thermoplastische Polymere eingespeist. Die Temperatur des Gehäuses wird dabei so gewählt, dass der Thermoplast aufschmilzt. Über eine zweite Einspeisstelle werden dann die Polyurethan bildenden Komponenten – getrennt voneinander oder auch bereits vorgemischt – zu dem aufgeschmolzenen Thermoplasten zudosiert. Gegebenenfalls kann man selbstverständlich die Polyurethan bildenden Komponenten auch an zwei oder mehreren Stellen in mehreren Portionen in den Extruder eindosieren.

Das erfindungsgemässe Verfahren kann gegebenenfalls auch in Gegenwart von Gleitmitteln, Stabilisatoren, Katalysatoren, anorganischen und organischen Füllstoffen, Pigmenten und Farbstoffen, Weichmachern, inerten organischen Lösungsmitteln usw., wie sie dem oben zitierten Stand der Technik entsprechen, durchgeführt werden.

Geeignete Gleitmittel sind beispielsweise Polyolefine, Polyalkylenoxide, Polyalkylenester, Polyalkylenamide und ähnliche Wachse. Insbesondere bei weichen Produkten empfiehlt sich die Anwendung von Gleitmitteln. Katalysatoren werden im allgemeinen in Mengen von 1 ppm bis 1000 ppm zugesetzt. Geeignete Katalysatoren sind z.B. die an sich bekannten Salze von Alkali- und Erdalkalimetallen, organische Metallverbindungen wie Zinkoctoat, Zinnoctoat, Dibutylzinndilaurat, Eisenacetylacetonat oder Titantetrabutylat sowie tertiäre Amine wie Triäthylamin, N-Methylmorpholin, Diazabicyclooctan oder N,N'-Dimethylbenzylamin. Weitere Vertreter von erfindungsgemäss geeigneten Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München, 1966, auf den Seiten 96 bis 102, beschrieben.

Wie bereits erwähnt, wird das erfindungsgemässe Verfahren vorzugsweise in Mehrwellenschneckenmaschinen, insbesondere solchen mit selbstreinigender Schneckengeometrie, ausgeführt.

Es ist jedoch auch möglich, die Reaktion nur teilweise in einer Mehrwellen-, bevorzugt einer Zweiwellenschneckenmaschine, durchzuführen und das Reaktionsgemisch in einem nachgeschalteten Einwellenextruder ausreagieren zu lassen.

Geeignete Schneckenmaschinen werden z.B. in den DE-Patentschriften 813 154, 862 668 und 940 109, der DE-OS 2 302 564 (US-Patent 3 963 679) sowie den US-Patenten 3 233 025 und 3 642 964) beschrieben.

Die Verweilzeiten der Reaktionsschmelze in der Schneckenmaschine betragen in der Regel 0,3–30 Minuten, bevorzugt 0,5–4 Minuten. Die Temperatur des Schneckengehäuses liegt zwischen etwa 60 und 300 °C (ca. 80 bis 280 °C, jedoch oberhalb des Schmelzpunktes des Thermoplasten, in der Eingangszone; ca. 100 bis 300 °C in der Mitte des Extruders und ca. 60 bis 250 °C in der Austragszone). Die aus dem Extruder austretende Schmelze wird nach an sich bekannten Verfahren abgeschreckt und zerkleinert. Die Verfahrensprodukte können auf die übliche Weise thermoplastisch oder in Lösung zu Filmen, Zahnrädern, Kabelummantelungen, Dichtungen usw. verarbeitet werden. Die folgenden Beispiele erläutern das erfindungsgemässe Verfahren. Wenn nicht anders vermerkt, sind Mengenangaben als Gewichtsteile bzw. Gewichtsprozente zu verstehen. In allen Beispielen wird eine Zweiwellenschneckenknetpresse des Typs ZSK 53 V der Firma Werner & Pfleiderer, Stuttgart, mit selbstreinigendem Wellenbesatz verwendet. Die Länge des Verfahrensteils entspricht etwa dem 42fachen Wellendurchmesser. Für alle Beispiele wird der gleiche Wellenbesatz mit einem Knetelementanteil von ca. 20% verwendet. Der Verfahrensteil besteht aus 12 Gehäusen, wobei das erste mit einem Einspeisetrichter für den Thermoplasten versehen ist. Funktion und Wirkungsweise der Schneckenmaschine, von Knet- und Förderelementen des Wellenbesatzes usw. sind in den Firmenschriften von Werner & Pfleiderer bzw. in der DE-OS 2 302 564 (US-PS 3 963 679) ausführlich beschrieben.

Beispiel 1

Als Thermoplast wird ein handelsübliches Emulsions-ABS-Polymerisat aus 17% Acrylnitril, 53% Styrol und 30% Butadien eingesetzt.

In den Trichter der Schneckenmaschine werden 50 Teile des granulierten thermoplastischen Copolymerisats eingespeist. An der Schneckenmaschine werden folgende Gehäusetemperaturen eingestellt:

100 °C (Gehäuse 1), 150 °C (Geh. 3), 180 °C (Geh. 5), 210 °C (Geh. 7), 220 °C (Geh. 9), 100 °C (Geh. 11), 100 °C (Geh. 12), 205 °C (Kopf).

Über eine zweite Einspeisstelle im Gehäuse 5 werden in die Schneckenmaschine

Versuch a):
10 Teile 1,4-Butandiol und
28,6 Teile 4,4'-Diphenylmethandiisocyanat
(NCO/OH-Äquivalentverhältnis = 1,03)

Versuch b):
25 Teile Butandiol-1,4 und
46,2 Teile Hexamethylendiisocyanat
(NCO/OH-Verhältnis = 0,99)

Versuch c):
20 Teile Butandiol-1,4
57,2 Teile 4,4'-Diphenylmethandiisocyanat und in Gehäuse 8
25 Teile Glasfasern, die mit einer handelsüblichen Schlichte behandelt sind, injiziert, wobei die Reaktionskomponenten jeweils vorvermischt wurden und darauf geachtet wurde, dass der Gemischdruck über dem in der Maschine sich aufbauenden Gegendruck liegt, um ein sauberes Zuführen der Injektionsmischung zu gewährleisten.

In allen drei Versuchen werden sehr schlagzähe, steife, thermoplastische Chemiewerkstoffe erhalten. Bei Versuch c) ist infolge des Zusatzes von Glasfasern (Faserlänge: 6 mm, Faserdurchmesser 12 µm) die Steifigkeit des Thermoplasten besonders hoch.

**Beispiel 2**

Als Thermoplast dient das ABS-Polymere aus Beispiel 1.

An der Schneckenmaschine werden folgende Gehäusetemperaturen eingestellt:

| Gehäuse | 1 | 3 | 5 | 7 | 9 | 11 | 12 |
|---|---|---|---|---|---|---|---|
| Temperatur (°C): | 100 | 180 | 200 | 220 | 220 | 160 | 100 |
| Kopftemperatur: | 210 °C | | | | | | |

**Versuch a):**

In den Trichter der Schneckenmaschine werden 57,5 Teile des granulierten ABS-Polymerisats eingetragen. Über eine Einspeisöffnung im Gehäuse 5 wird das folgende vorvermischte Polyurethan-Reaktionsgemisch injiziert:
100 Teile eines Polyesters aus Adipinsäure und Diäthylenglykol (Molekulargewicht: 2000),
30 Teile Butandiol-1,4
1 Teil Stearylamid,
0,3 Teile 2,6-Di-t.butyl-4-methylphenol und
98,7 Teile Diphenylmethandiisocyanat
(NCO/OH-Verhältnis = 1,03).

Man erhält einen thermoplastischen Chemiewerkstoff von hoher Steifigkeit und guter Schlagzähigkeit in der Kälte. Die Kerbschlagzähigkeit nach DIN 53453 bei − 30 °C beträgt 20 kJ/m$^2$. Die Zugfestigkeit, gemessen nach DIN 53504, liegt bei 45 MPa. Nach 16-stündiger Behandlung mit siedendem Methylenchlorid werden nur 4 Gew.-% des ABS-Polymeren extrahiert.

**Versuch b):**

In den Trichter der Schneckenmaschine werden 60,8 Teile des ABS-Polymeren eingetragen. Über eine weitere Einspeisstelle im Gehäuse 2 werden 100 Teile des Polyesters aus Versuch a) eindosiert. Im Gehäuse 5 wird das folgende vorvermischte Reaktionsgemisch injiziert:
10 Teile Butandiol-1,4,
0,5 Teile Stearylamid und
41,5 Teile Diphenylmethandiisocyanat
(NCO/OH-Verhältnis = 1,03).

Es wird ein Thermoplast mit ähnlichen Eigenschaften wie bei Versuch a) erhalten.

**Versuch c):**

In den Trichter der Schneckenmaschine werden 38,5 Teile des gratnulierten ABS-Polymeren eingetragen. Über eine Einspeisöffnung im Gehäuse 2 wird das folgende Reaktionsgemisch injiziert:
100 Teile eines Mischpolyesters aus Adipinsäure, Äthylenglykol und Butandiol (Molekulargewicht: 2000),
60 Teile Butandiol-1,4,
1 Teil Stearylamid,
0,5 Teile 2,2',6,6'-Tetraisopropyldiphenylcarbodiimid und
185 Teile Diphenylmethandiisocyanat
(NCO/OH-Verhältnis = 1,03).

Es wird wieder ein thermoplastischer Werkstoff von hoher Steifigkeit und Schlagzähigkeit erhalten.

**Versuch d): (Vergleich)**

In den Trichter der Schneckenmaschine wird das Polyurethan-Reaktionsgemisch aus Versuch a) eingetragen. Im Gehäuse 6 werden 57,5 Teile des aufgeschmolzenen ABS-Polymerisats eingespeist. Die Arbeitsweise entspricht somit jener der DE-OS 23 02 564.

Der erhaltene Thermoplast weist nur mässige Kälteschlagfestigkeiten auf: Die Schlagzähigkeit bei − 30 °C beträgt 10 kJ/m$^2$; die Zugfestigkeit liegt bei 35 MPa. Durch 16-stündige Behandlung mit siedendem Methylenchlorid lassen sich 12 Gew.-% des ABS-Polymeren extrahieren.

**Beispiel 3**

Als Thermoplast dient ein Polycarbonat auf Basis von Bisphenol A, hergestellt durch kontinuierliche Phasengrenzflächenpolykondensation gemäss DE-PS 971 790.

Relative Viskosität: 1,30 (gemessen in 0,5%iger Lösung in Methylenchlorid).

An der Schneckenmaschine werden folgende Gehäusetemperaturen eingestellt:

| Gehäuse: | 1 | 3 | 5 | 7 | 9 | 11 | 12 |
|---|---|---|---|---|---|---|---|
| Temperatur (°C): | 100 | 250 | 270 | 250 | 230 | 190 | 190 |
| Kopftemperatur: | 225 °C | | | | | | |

In den Trichter der Schneckenmaschine werden 146 Teile des Polycarbonats eingetragen. Über eine Einspeisstelle im Gehäuse 2 wird ein Reaktionsgemisch aus
100 Teilen eines Polyesters aus Adipinsäure und 1,4-Butandiol (Molekulargewicht: 2000) und 61,5 Teilen Diphenylmethandiisocyanat (NCO/OH-Verhältnis = 1,03) zudosiert. Im Gehäuse 6 werden 17 Teile Butandiol-1,4 als Kettenverlängerungsmittel injiziert.

Man erhält wiederum einen Chemiewerkstoff von hoher Steifigkeit und guter Schlagzähigkeit in der Kälte.

**Patentansprüche**

1. Verfahren zur Herstellung von thermoplastischen Chemiewerkstoffen durch Umsetzung von

A) einem oder mehreren organischen Polyisocyanaten

B) gegebenenfalls einem oder mehreren im wesentlichen linearen Polyolen mit Molekulargewichten zwischen 400 und 10 000 und

C) einem oder mehreren Hydroxylgruppen und/oder Aminogruppen aufweisenden Kettenverlängerungsmitteln mit einem Molekulargewicht unter 400,

wobei das Verhältnis der NCO-Gruppen von Komponente A) zu den zerewitinoffaktiven Gruppen der Komponenten B) und C) zwischen 0,9 und 1,2 liegt,

in Gegenwart eines vorgefertigten thermoplastischen Polymeren in Extrudern,

dadurch gekennzeichnet, dass man 4 bis 65 Gew.-%, bezogen auf Verfahrensprodukt, des vorgefertigten thermoplastischen Polymeren über eine erste Einspeisstelle in den Extruder einbringt, danach über eine zweite und gegebenenfalls weitere Einspeisstelle 35 bis 96 Gew.-%, bezogen auf Verfahrensprodukt, der Komponenten A) bis C) dem aufgeschmolzenen thermoplastischen Polymeren zudosiert und, nachdem die Umsetzung der Komponenten A) bis C) im wesentlichen abgeschlossen ist, das Verfahrensprodukt aus dem Extruder austrägt.

2. Verfahren nach Anspruch 1, dadurch gekennzeichnet, dass man als thermoplastisches Polymer 4 bis 30 Gew.-%, bezogen auf Verfahrensprodukt, eines ABS-Polymeren einsetzt.

3. Verfahren nach Anspruch 1, dadurch gekennzeichnet, dass man als thermoplastisches Polymer 25 bis 60 Gew.-%, bezogen auf Verfahrensprodukt, eines thermoplastischen Polycarbonats einsetzt.

4. Verfahren nach Anspruch 1, dadurch gekennzeichnet, dass man als thermoplastisches Polymer 20–65 Gew.-%, bezogen auf Verfahrensprodukt, eines thermoplastischen Polyurethans einsetzt.

**Claims:**

1. Process for the production of thermoplastic synthetic materials by the reaction of

A) one or more organic polyisocyanates,

B) optionally one or more substantially linear polyols having molecular weights of from 400 to 10 000 and

C) one or more chain lengthening agents with a molecular weight below 400 having hydroxyl groups and/or amine groups,

in which the ratio of isocyanate groups of component A) to Zerewitinoff active groups of components B) and C) is in the range of from 0.9 to 1.2, in the presence of a previously prepared thermoplastic polymer in extruders, characterised in that from 4 to 65% by weight, based on the product of the process, of previously prepared thermoplastic polymer is introduced into the extruder at a first feed point, from 35 to 96% by weight, based on the product of the process, to components A) to C) are then added to the molten thermoplastic polymer by introduction through a second feed point and optionally further feed points, and, when the reaction of components A) to C) has been substantially completed, the product of the process is discharged from the extruder.

2. Process according to Claim 1, characterised in that the thermoplastic polymer used is an ABS polymer in a quantity of from 4 to 30% by weight, based on the product of the process.

3. Process according to Claim 1, characterised in that the thermoplastic polymer used is a thermoplastic polycarbonate in a quantity of from 25 to 60% by weight, based on the product of the process.

4. Process according to Claim 1, characterised in that the thermoplastic polymer used is a thermoplastic polyurethane in a quantity of from 20 to 65% by weight, based on the product of the process.

**Revendications**

1. Procédé pour la préparation de matériaux chimiques thermoplastiques par réaction de

A) un ou plusieurs polyisocyanates organiques, de préférence des diisocyanates, éventuellement

B) un ou plusieurs polyols sensiblement linéaires de poids moléculaires entre 400 et 10 000, et

C) un ou plusieurs agents d'allongement de chaînes présentant un ou plusieurs groupes hydroxyle et/ou groupes amino, d'un poids moléculaire de moins de 400,

le rapport des groupes NCO du composant A) aux groupes réactifs de Zérévitinoff des composants B) et C) étant compris entre 0,90 et 1,2, en présence d'un polymère thermoplastique préparé au préalable dans des extrudeuses, caractérisé en ce que l'on introduit 4 à 65% en poids, par rapport au produit du procédé, du polymère thermoplastique préparé au préalable, en un point d'introduction dans l'extrudeuse, on dose ensuite par un deuxième et éventuellement d'autres points d'introduction 35 à 96% en poids, par rapport au produit du procédé, des composants A) à C) dans le polymère thermoplastique fondu et, lorsque la réaction des composants A) à C) est sensiblement terminée, on évacue le produit du procédé hors de l'extrudeuse.

2. Procédé selon la revendication 1, caractérisé en ce que l'on utilise comme polymère thermoplastique 4 à 30% en poids, par rapport au produit du procédé, d'un polymère ABS.

3. Procédé selon la revendication 1, caractérisé en ce que l'on utilise comme polymère thermoplastique 25 à 60% en poids, par rapport au produit du procédé, d'un polycarbonate thermoplastique.

4. Procédé selon la revendication 1, caractérisé en ce que l'on utilise comme polymère thermoplastique 20 à 65% en poids, par rapport au produit du procédé, d'un polyuréthanne thermoplastique.